(19)

Europäisches Patentamt

European Patent Office

Office européen des brevets

(11) **EP 3 404 969 A1**

(12) **EUROPEAN PATENT APPLICATION**
published in accordance with Art. 153(4) EPC

(43) Date of publication:
**21.11.2018 Bulletin 2018/47**

(21) Application number: **16884741.6**

(22) Date of filing: **24.11.2016**

(51) Int Cl.:
***H04W 56/00*** (2009.01)      ***H04J 11/00*** (2006.01)

(86) International application number:
**PCT/CN2016/107135**

(87) International publication number:
**WO 2017/121189 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.01.2016  CN 201610016555**

(71) Applicant: **ZTE Corporation**
**Shenzhen, Guangdong 518057 (CN)**

(72) Inventors:
• **LIANG, Chunli**
  **Shenzhen**
  **Guangdong 518057 (CN)**

• **DAI, Bo**
  **Shenzhen**
  **Guangdong 518057 (CN)**
• **XIA, Shuqiang**
  **Shenzhen**
  **Guangdong 518057 (CN)**
• **FANG, Huiying**
  **Shenzhen**
  **Guangdong 518057 (CN)**
• **YANG, Weiwei**
  **Shenzhen**
  **Guangdong 518057 (CN)**
• **YUAN, Yifei**
  **Shenzhen**
  **Guangdong 518057 (CN)**

(74) Representative: **Lavoix**
**Bayerstrasse 83**
**80335 München (DE)**

(54) **METHOD AND APPARATUS FOR SENDING SECONDARY SYNCHRONIZATION SIGNAL IN COMMUNICATION SYSTEM, AND STORAGE MEDIUM**

(57)      Provided are a method and apparatus for sending a secondary synchronization signal in a communication system, and a storage medium, relating to signal transmission in the field of communications. The method comprises: determining a sequence parameter of a secondary synchronization signal according to at least one piece of the following information: cell identification information, frame timing information, working mode information and time division duplex (TDD) or frequency division duplex (FDD) system type information; and generating the secondary synchronization signal according to the determined sequence parameter.

```
┌─────────────────────────────────────────────┐
│  a sequence parameter of an SSS is determined │
└─────────────────────────────────────────────┘
                      │
                      ▼
┌─────────────────────────────────────────────┐
│  the SSS is generated according to the sequence │
│                  parameter                    │
└─────────────────────────────────────────────┘
```

**FIG. 1**

EP 3 404 969 A1

**Description**

**TECHNICAL FIELD**

The present disclosure relates to signal transmission in the field of communications, and in particular to a method and apparatus for sending a Secondary Synchronization Signal, SSS, in a communication system, and a storage medium.

**BACKGROUND**

Machine Type Communication, MTC, User Equipment, UE, also called Machine to Machine, M2M, user communication equipment, is a primary form of application of an Internet of Things at present. A 3rd Generation Partnership Project, 3GPP, technical report TR45.820V200 discloses a number of technologies applicable to a Cellular Internet of Things, C-IOT, among which a most compelling one is Narrowband Long Term Evolution, NB-LTE. A bandwidth of an NB-LTE system is 200kHz, identical to that of a channel of a Global system for Mobile Communication, GSM, which greatly facilitate reuse of a GSM spectrum by the NB-LTE system as well as lowering a mutual interference with a neighboring GSM channel. An interval among downlink subcarriers and a transmit bandwidth of NB-LTE are 15kHz and 180kHz, respectively, which are respectively an inter-subcarrier interval and a bandwidth of a Physical Resource Block, PRB, of a Long-Term Evolution, LTE, system.

Design of a synchronization channel and a broadcast channel is vital for a communication system. In an LTE system, each of a Primary Synchronization Signal, PSS, and a Secondary Synchronization Signal, SSS, occupies but one Orthogonal Frequency Division Multiplexing, OFDM, symbol on a time domain and 6 PRBs on a frequency domain. However, in an NB-LTE system, only one PRB in the frequency domain is occupied. Accordingly, to achieve performance in detecting a synchronization signal same as that with an existing LTE system, a synchronization signal may have to be extended in the time domain. An exemplary work relating to a synchronization signal is as follows.

A PSS and an SSS occupy, in a sub-frame for sending a synchronization signal with a normal cyclic prefix, N OFDM symbols and A OFDM symbols in the time domain, respectively. The N is either 9 or 11. Values of the A range from 6 to 11.

A PSS and an SSS occupy, in a sub-frame for sending a synchronization signal with an extended cyclic prefix, 9 OFDM symbols and B OFDM symbols in the time domain, respectively. Values of the B range from 6 to 9.

In an LTE system, a PSS serves for timing, estimating an initial frequency offset and an initial time offset, and carrying information on an intra-cell-group Identification, ID. An SSS serves for carrying information on an ID of a cell group and information on frame timing. Complete information on an ID of a cell is determined according to the information on the ID of the cell group and the information on the intra-cell-group ID. In an NB-LTE system, a PSS mainly serves for timing and estimating an initial frequency offset and an initial time offset, and no longer for carrying information on a ID of a cell. Information on IDs of 504 cells have to be carried by an SSS. As a synchronization signal of an NB-LTE system is extended onto multiple OFDM symbols in the time domain, the synchronization signal will have a different design than in an LTE system. Moreover, as mentioned above, information is borne in an NB-LTE in a mode different from that in an LTE system. Therefore, a new method for sending an SSS is to be considered.

**SUMMARY**

Machine Type Communication, MTC, User Equipment, UE, also called Machine to Machine, M2M, user communication equipment, is a primary form of application of an Internet of Things at present. A 3rd Generation Partnership Project, 3GPP, technical report TR45.820V200 discloses a number of technologies applicable to a Cellular Internet of Things, C-IOT, among which a most compelling one is Narrowband Long Term Evolution, NB-LTE. A bandwidth of an NB-LTE system is 200kHz, identical to that of a channel of a Global system for Mobile Communication, GSM, which greatly facilitate reuse of a GSM spectrum by the NB-LTE system as well as lowering a mutual interference with a neighboring GSM channel. An interval among downlink subcarriers and a transmit bandwidth of NB-LTE are 15kHz and 180kHz, respectively, which are respectively an inter-subcarrier interval and a bandwidth of a Physical Resource Block, PRB, of a Long-Term Evolution, LTE, system.

Design of a synchronization channel and a broadcast channel is vital for a communication system. In an LTE system, each of a Primary Synchronization Signal, PSS, and a Secondary Synchronization Signal, SSS, occupies but one Orthogonal Frequency Division Multiplexing, OFDM, symbol on a time domain and 6 PRBs on a frequency domain. However, in an NB-LTE system, only one PRB in the frequency domain is occupied. Accordingly, to achieve performance in detecting a synchronization signal same as that with an existing LTE system, a synchronization signal may have to be extended in the time domain. An exemplary work relating to a synchronization signal is as follows.

A PSS and an SSS occupy, in a sub-frame for sending a synchronization signal with a normal cyclic prefix, N OFDM symbols and A OFDM symbols in the time domain, respectively. The N is either 9 or 11. Values of the A range from 6 to 11.

A PSS and an SSS occupy, in a sub-frame for sending a synchronization signal with an extended cyclic prefix, 9 OFDM symbols and B OFDM symbols in the time domain, respectively. Values of the B range from 6 to 9.

An apparatus for sending a Secondary Synchronization Signal, SSS, in a communication system includes a processor, and memory having stored thereon executable instructions for causing the processor to perform options as follows.

A sequence parameter of an SSS is determined according to at least one of information on an identification, ID, of a cell, information on frame timing, information on a working mode, or information on a type of a system of Time Division Duplexing, TDD, or Frequency Division Duplexing, FDD.

The SSS is generated according to the sequence parameter.

A storage medium has stored thereon executable instructions for performing a method for sending an SSS in a communication system according to an embodiment herein.

Embodiments herein have beneficial effects as follows.

With the method, apparatus, and storage medium herein, an SSS sent may occupy a PRB on a frequency domain, and may occupy multiple OFDM symbols in one or two sub-frames on a time domain. Information on an ID of a cell may be indicated by a secondary synchronization sequence. Information on frame timing may be indicated by a secondary synchronization sequence or a scrambling sequence. In this way, an SSS may be sent in a NB-LTE system. When being generated according to a basic sequence, an SSS may be simplified. By generating an SSS according to a combination of a basic sequence and a scrambling sequence, a number of symbols on each of which second sequences used by SSSs in any two cells collide with each other may be minimized, thereby improving performance in detecting an SSS, as well as maximizing an interval among cyclic shifts of a same root sequence.

## BRIEF DESCRIPTION OF THE DRAWINGS

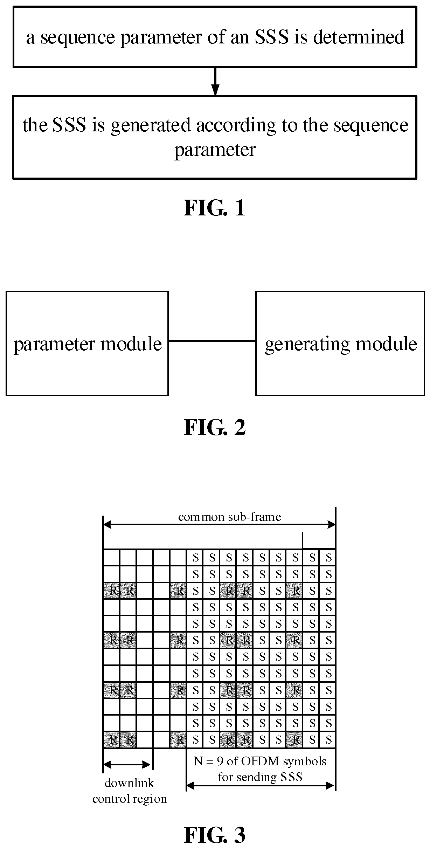

FIG. 1 is a flowchart of a method for sending an SSS according to an embodiment herein.
FIG. 2 is a diagram of a structure of an apparatus for sending an SSS according to an embodiment herein.
FIG. 3 is a pattern for mapping an SSS of an NB-LTE system to resources in a sub-frame according to an embodiment herein.

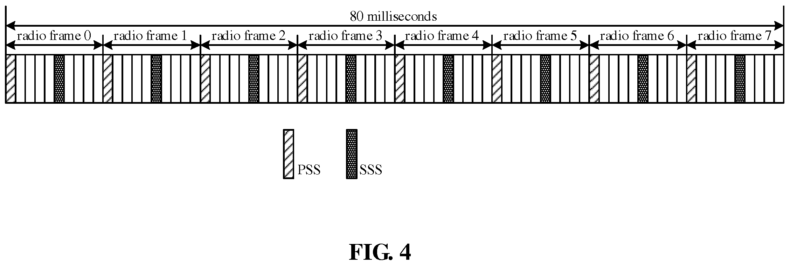

FIG. 4 is an exemplary diagram of a pattern of sub-frames for sending synchronization signals of an NB-LTE system according to an embodiment herein.

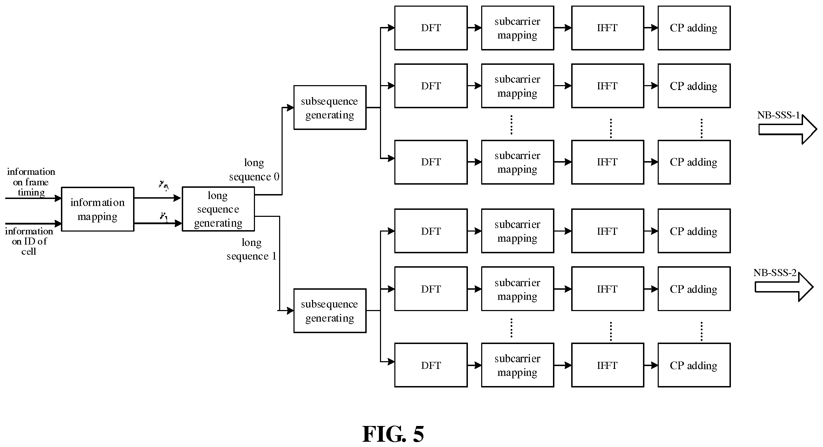

FIG. 5 is a diagram of a structure of a mode 1 for generating an SSS according to an embodiment herein.

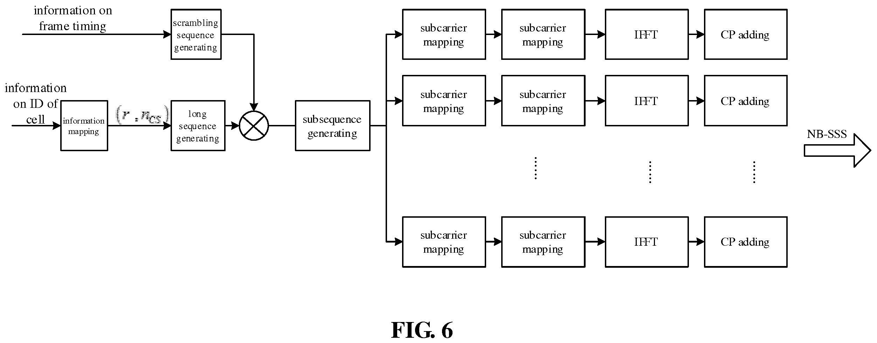

FIG. 6 is a diagram of a structure of a mode 2 for generating an SSS according to an embodiment herein.

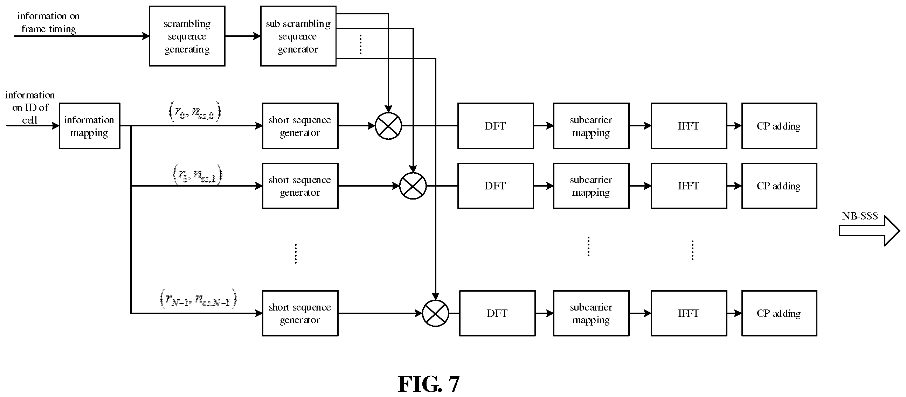

FIG. 7 is a diagram of a structure of a mode 3 for generating an SSS according to an embodiment herein.

## DETAILED DESCRIPTION

In view of the above, embodiments herein propose a method and apparatus for sending an SSS in a communication system, capable of sending an SSS based on an NB-LTE system.

To this end, a technical solution herein may be implemented as follows.

A method for sending a Secondary Synchronization Signal, SSS, in a communication system includes options as follows.

A sequence parameter of an SSS is determined according to at least one of information on an identification, ID, of a cell, information on frame timing, information on a working mode, or information on a type of a system of Time Division Duplexing, TDD, or Frequency Division Duplexing, FDD.

The SSS is generated according to the sequence parameter.

The SSS may occupy a Physical Resource Block, PRB, on a frequency domain. The SSS may occupy multiple Orthogonal Frequency Division Multiplexing, OFDM, symbols in one or two sub-frames on a time domain.

The SSS may be generated according to a basic sequence. Alternatively, the SSS may be generated according to a combination of a basic sequence and a scrambling sequence.

The basic sequence may be generated according to a first sequence. Alternatively, the basic sequence may be generated according to a second sequence. A length of the first sequence may be $N_{\mathrm{RB}}^{\mathrm{SC}} \times N$. A length of the second sequence may be $N_{\mathrm{RB}}^{\mathrm{SC}}$. The $N_{\mathrm{RB}}^{\mathrm{SC}}$ may be a number of subcarriers occupied on a frequency domain by a Physical Resource Block, PRB. The N may be a number of Orthogonal Frequency Division Multiplexing, OFDM, symbols occupied in a sub-frame by the SSS.

When the SSS is generated according to the basic sequence, and the basic sequence is the first sequence, the sequence parameter of the SSS may be determined according to the information on the ID of the cell and the information on frame timing. The sequence parameter of the SSS may include a root index for generating the first sequence. There may be two first sequences.

Root indexes ($r_0$, $r_1$) of the two first sequences may be determined according to the information on the ID of the cell and the information on frame timing as follows.

When there are 2 frame timings, i.e., first frame timing and second frame timing, the root indexes of the two first sequences corresponding to the first frame timing may be determined such that $r_0 < r_1$ is met, and the root indexes of the two first sequences corresponding to the second frame timing may be acquired by swapping the root indexes of the two first sequences corresponding to the first frame timing.

When there are 4 frame timings, i.e., first frame timing, second frame timing, third frame timing, and fourth frame timing, the root indexes of the two first sequences corresponding to the first frame timing may be determined such that $r_1 - r_0 > k_1$ is met; the root indexes of the two first sequences corresponding to the second frame timing may be acquired by swapping the root indexes of the two first sequences corresponding to the first frame timing; the root indexes of the two first sequences corresponding to the third frame timing may be determined such that $r_1 - r_0 > k_2$ is met; the root indexes of the two first sequences corresponding to the fourth frame timing may be acquired by swapping the root indexes of the two first sequences corresponding to the third frame timing. Values of the $k_1$, $k_2$ may belong respectively to two sets with no overlap.

The root indexes $(r_0, r_1)$ of the two first sequences may be determined according to the information on the ID of the cell and the information on frame timing as follows.

The root indexes of the two first sequences corresponding to the first frame timing may be determined as follows.

In option 1, $q'=\lfloor N_{ID}/(N_{seq}-1)\rfloor$ may be set.

In option 2, $q = \left\lfloor \dfrac{N_{ID} + q'(q'+1)/2}{N_{seq}-1} \right\rfloor$ may be computed.

In option 3, $r'=N_{ID}+q(q+1)/2$ may be computed.
In option 4, $r_0=\mathrm{mod}(r', N_{seq})+1$ may be computed.
In option 5, $r_1=\mathrm{mod}(r_0+\lfloor r'/N_{seq}\rfloor, N_{seq})+1$ may be computed.
The $N_{ID}$ may be an index of the ID of the cell. The $N_{ID}=\{0,1,2,...,503\}$. The $N_{seq}$ may be a number of the first sequences with different root indexes. The mod may stand for complementation. The $\lfloor \ \rfloor$ may stand for rounding down.

When the SSS is generated according to the combination of the basic sequence and the scrambling sequence, and the basic sequence is the first sequence, the sequence parameter of the SSS may be determined according to the information on the ID of the cell; and the scrambling sequence may be determined according to the information on frame timing. The sequence parameter of the SSS may include a cyclic shift and a root index for generating the first sequence. There may be one or two first sequences.

A cyclic shift and the root index of the first sequence may be determined according to the information on the ID of the cell as follows.
The root index may be

$$r = \mathrm{mod}(N_{ID}, N_{Seq}^{L})+1.$$

The cyclic shift may be $n_{CS} = \Delta_{CS}^{L} \times \left\lfloor \dfrac{N_{ID}}{N_{Seq}^{L}} \right\rfloor.$

The $N_{ID}$ may be the index of the ID of the cell. The $N_{ID}=\{0,1,2,...,503\}$. The $N_{Seq}^{L}$ may be the number of the first sequences with different root indexes. The $\Delta_{CS}^{L}$ may be an interval among cyclic shifts of the first sequence. The mod may stand for complementation. The $\lfloor \ \rfloor$ may stand for rounding down.

The cyclic shift and the root index of the first sequence may be determined according to the information on the ID of the cell, such that a minimal interval among cyclic shifts of the first sequences corresponding to different IDs of cells having identical root indexes may be maximized.

When the SSS is generated according to the combination of the basic sequence and the scrambling sequence, and the basic sequence is the second sequence, the sequence parameter of the SSS may be determined according to the information on the ID of the cell; and the scrambling sequence may be determined according to the information on frame timing. The sequence parameter of the SSS may include a cyclic shift and a root index corresponding to the second sequence of the SSS on each OFDM symbol.

The cyclic shift and the root index corresponding to the second sequence of the SSS on the each OFDM symbol may be determined according to the information on the ID of the cell as follows.

The root index may be

$$r_k = \mathrm{mod}(I_{Seq,k}, N_{Seq}^{S})+1.$$

The cyclic shift may be

$$n_{CS,k} = \Delta_{CS}^{S} \times \left\lfloor \dfrac{I_{Seq,k}}{N_{Seq}^{S}} \right\rfloor.$$

The $I_{seq,k}$ on the each OFDM symbol may be determined as follows.
$I_{seq,0}=\mathrm{mod}(N_{ID}, X)$ for the SSS on an OFDM symbol numbered 0.
$I_{Seq,k}=\mathrm{mod}(I_{Seq,0}+k\times n_{seg}, X)$ for the SSS on an OFDM symbol numbered k.
The $n_{seg}=\lceil N_{ID}/X\rceil$. The X may be a number of second sequences, including second sequences with different root indexes and second sequences with identical root indexes and different cyclic shifts. The $N_{Seq}^{S}$ may be a number of the second sequences with different root indexes. The $\Delta_{CS}^{S}$ may be an interval among cyclic shifts of the second sequences. The ⌈ ⌉ may stand for rounding up.

The basic sequence may be a Zadoff-Chu, ZC, sequence, a pseudorandom sequence, a computer generated sequence, etc. The scrambling sequence may be a pseudorandom sequence.

When the basic sequence is the ZC sequence, and the basic sequence is the first sequence, the length of the first sequence may be determined according to the N. For the N = 11, a length of the ZC sequence may be one of {141,139,131,133}. For the N = 9, the length of the ZC sequence may be one of {107, 109}. The length of the ZC sequence may be one of {61,71,73}.

When a basic sequence of a Primary Synchronization Signal, PSS, is a ZC sequence, a ZC first sequence of the SSS having a length different from a length of the ZC sequence of the PSS may be used. Alternatively, a ZC first sequence of the SSS having a length identical to the length of the ZC sequence of the PSS, but having a root index different from a root index of the ZC sequence of the PSS, may be used.

In view of the above, embodiments herein further provide an apparatus for sending a Secondary Synchronization Signal, SSS, in a communication system. The apparatus includes a parameter module and a generating module.

The parameter module is arranged for: determining a sequence parameter of an SSS according to at least one of information on an identification, ID, of a cell, information on frame timing, information on a working mode, or information on a type of a system of Time Division Duplexing, TDD, or Frequency Division Duplexing, FDD.

The generating module is arranged for: generating the SSS according to the sequence parameter.

The SSS so generated may occupy a Physical Resource Block, PRB, on a frequency domain. The SSS so generated may occupy multiple Orthogonal Frequency Division Multiplexing, OFDM, symbols in one or two sub-frames on a time domain.

The generating module may be further arranged for: generating the SSS according to a basic sequence. The generating module may be further arranged for: generating the SSS according to a combination of a basic sequence and a scrambling sequence.

The generating module may be arranged for: generating the basic sequence according to a first sequence. The generating module may be arranged for: generating the basic sequence according to a second sequence. A length of the first sequence may be $N_{RB}^{SC} \times N$. A length of the second sequence may be $N_{RB}^{SC}$. The $N_{RB}^{SC}$ may be a number of subcarriers occupied on a frequency domain by a Physical Resource Block, PRB. The N may be a number of Orthogonal Frequency Division Multiplexing, OFDM, symbols occupied in a sub-frame by the SSS.

The parameter module may be further arranged for: in response to the SSS being generated according to the basic sequence, and the basic sequence being the first sequence, determining the sequence parameter of the SSS according to the information on the ID of the cell and the information on frame timing. The sequence parameter of the SSS may include a root index for generating the first sequence. There may be two first sequences.

The parameter module may be further arranged for: determining root indexes $(r_0, r_1)$ of the two first sequences according to the information on the ID of the cell and the information on frame timing by:

in response to 2 frame timings of first frame timing and second frame timing, determining the root indexes of the two first sequences corresponding to the first frame timing such that $r_0 < r_1$ is met, and acquiring the root indexes of the two first sequences corresponding to the second frame timing by swapping the root indexes of the two first sequences corresponding to the first frame timing; or

in response to 4 frame timings of first frame timing, second frame timing, third frame timing, and fourth frame timing, determining the root indexes of the two first sequences corresponding to the first frame timing such that $r_1 - r_0 > k_1$ is met; acquiring the root indexes of the two first sequences corresponding to the second frame timing by swapping the root indexes of the two first sequences corresponding to the first frame timing; determining the root indexes of the two first sequences corresponding to the third frame timing such that $r_1 - r_0 > k_2$ is met; acquiring the root indexes of the two first sequences corresponding to the fourth frame timing by swapping the root indexes of the two first sequences corresponding to the third frame timing. Values of the $k_1, k_2$ may belong respectively to two sets with no overlap.

The parameter module may be further arranged for: determining the root indexes $(r_0, r_1)$ of the two first sequences according to the information on the ID of the cell and the information on frame timing by determining the root indexes of the two first sequences corresponding to the first frame timing, by:

setting $q' = \lfloor N_{ID}/(N_{seq}-1) \rfloor$;

computing $q = \left\lfloor \dfrac{N_{ID} + q'(q'+1)/2}{N_{seq}-1} \right\rfloor$;

computing $r' = N_{ID} + q(q+1)/2$;
computing $r_0 = \mathrm{mod}(r', N_{seq}) + 1$; and
computing $r_1 = \mathrm{mod}(r_0 + \lfloor r'/N_{seq} \rfloor, N_{seq}) + 1$.

The $N_{ID}$ may be an index of the ID of the cell.

The $N_{ID}$={0,1,2,...,503}. The $N_{seq}$ may be a number of the first sequences with different root indexes. The mod may stand for complementation. The ⌊ ⌋ may stand for rounding down.

The parameter module may be further arranged for: in response to the SSS being generated according to the combination of the basic sequence and the scrambling sequence, and the basic sequence being the first sequence, determining the sequence parameter of the SSS according to the information on the ID of the cell, determining the scrambling sequence according to the information on frame timing. The sequence parameter of the SSS may include a cyclic shift and a root index for generating the first sequence. There may be one or two first sequences.

The parameter module may be further arranged for: determining a cyclic shift and the root index of the first sequence according to the information on the ID of the cell as

the root index $r = \mathrm{mod}(N_{ID}, N_{Seq}^{L}) + 1$ and

the cyclic shift $n_{CS} = \Delta_{CS}^{L} \times \left\lfloor \dfrac{N_{ID}}{N_{Seq}^{L}} \right\rfloor$.

The $N_{ID}$ may be the index of the ID of the cell. The $N_{ID}$={0,1,2,...,503}. The $N_{Seq}^{L}$ may be the number of the first sequences with different root indexes. The $\Delta_{CS}^{L}$ may be an interval among cyclic shifts of the first sequence. The mod may stand for complementation. The ⌊ ⌋ may stand for rounding down.

The parameter module may be further arranged for: determining the cyclic shift and the root index of the first sequence according to the information on the ID of the cell, such that a minimal interval among cyclic shifts of the first sequences corresponding to different IDs of cells having identical root indexes is maximized.

The parameter module may be arranged for: in response to the SSS being generated according to the combination of the basic sequence and the scrambling sequence, and the basic sequence being the second sequence, determining the sequence parameter of the SSS according to the information on the ID of the cell, determining the scrambling sequence according to the information on frame timing. The sequence parameter of the SSS may include a cyclic shift and a root index corresponding to the second sequence of the SSS on each OFDM symbol.

The parameter module may be further arranged for: determining the cyclic shift and the root index corresponding to the second sequence of the SSS on the each OFDM symbol according to the information on the ID of the cell as

the root index $r_{k} = \mathrm{mod}(I_{Seq,k}, N_{Seq}^{S}) + 1$ and

the cyclic shift $n_{CS,k} = \Delta_{CS}^{S} \times \left\lfloor \dfrac{I_{Seq,k}}{N_{Seq}^{S}} \right\rfloor$.

The $I_{seq,k}$ on the each OFDM symbol may be determined as follows.

$I_{seq,0}$=mod($N_{ID}$,X) for the SSS on an OFDM symbol numbered 0.

$I_{Seq,k}$=mod($I_{Seq,0}$+k×$n_{seg}$,X) for the SSS on an OFDM symbol numbered k.

The $n_{seg}$=⌈$N_{ID}$/X⌉. The X may be a number of second sequences, including second sequences with different root indexes and second sequences with identical root indexes and different cyclic shifts. The $N_{Seq}^{S}$ may be a number of the second sequences with different root indexes. The $\Delta_{CS}^{S}$ may be an interval among cyclic shifts of the second sequences. The ⌈ ⌉ may stand for rounding up.

The parameter module may be further arranged for: in response to the basic sequence being a Zadoff-Chu, ZC, sequence, and the basic sequence being the first sequence, determining the length of the first sequence according to the N. For the N = 11, a length of the ZC sequence may be one of {141,139,131,133}. For the N = 9, the length of the ZC sequence may be one of {107, 109}. For the N = 6, the length of the ZC sequence may be one of {61,71,73}.

When a basic sequence of a Primary Synchronization Signal, PSS, is a ZC sequence, a ZC first sequence of the SSS having a length different from a length of the ZC sequence of the PSS may be used. Alternatively, a ZC first sequence of the SSS having a length identical to the length of the ZC sequence of the PSS, but having a root index different from a root index of the ZC sequence of the PSS, may be used.

Embodiments herein have beneficial effects as follows.

With the method, apparatus, and storage medium herein, an SSS sent may occupy a PRB on a frequency domain, and may occupy multiple OFDM symbols in one or two sub-frames on a time domain. Information on an ID of a cell may be indicated by a secondary synchronization sequence. Information on frame timing may be indicated by a secondary synchronization sequence or a scrambling sequence. In this way, an SSS may be sent in a NB-LTE system. When being generated according to a basic sequence, an SSS may be simplified. By generating an SSS according to a combination of a basic sequence and a scrambling sequence, a number of symbols on each of which second sequences used by SSSs in any two cells collide with each other may be minimized, thereby improving performance in detecting an SSS, as well as maximizing an interval among cyclic shifts of a same root sequence.

Industrial applicability

With embodiments herein, a sequence parameter of an SSS is determined according to information on at least one of an ID of a cell, frame timing, a working mode, or a type of a system of TDD or FDD. The SSS is generated according to the sequence parameter. An SSS sent may occupy a PRB on a frequency domain, and may occupy multiple OFDM symbols in one or two sub-frames on a time domain. Information on an ID of a cell may be indicated by a secondary synchronization sequence. Information on frame timing may be indicated by a secondary synchronization sequence or a scrambling sequence. In this way, an SSS may be sent in a NB-LTE system.

## Claims

1. A method for sending a Secondary Synchronization Signal, SSS, in a communication system, comprising:

   determining a sequence parameter of an SSS according to at least one of information on an identification, ID, of a cell, information on frame timing, information on a working mode, or information on a type of a system of Time Division Duplexing, TDD, or Frequency Division Duplexing, FDD; and
   generating the SSS according to the sequence parameter.

2. The method according to claim 1, wherein the SSS occupies a Physical Resource Block, PRB, on a frequency domain, and multiple Orthogonal Frequency Division Multiplexing, OFDM, symbols in one or two sub-frames on a time domain.

3. The method according to claim 1, further comprising: generating the SSS according to a basic sequence or a combination of a basic sequence and a scrambling sequence.

4. The method according to claim 3, further comprising: generating the basic sequence according to a first sequence or a second sequence, a length of the first sequence being $N_{\mathrm{RB}}^{\mathrm{SC}} \times N$, a length of the second sequence being $N_{\mathrm{RB}}^{\mathrm{SC}}$, the $N_{\mathrm{RB}}^{\mathrm{SC}}$ being a number of subcarriers occupied on a frequency domain by a Physical Resource Block, PRB, the N being a number of Orthogonal Frequency Division Multiplexing, OFDM, symbols occupied in a sub-frame by the SSS.

5. The method according to claim 4, wherein the determining a sequence parameter of an SSS according to at least one of information on an identification, ID, of a cell, information on frame timing, information on a working mode, or information on a type of a system of Time Division Duplexing, TDD, or Frequency Division Duplexing, FDD comprises: in response to the SSS being generated according to the basic sequence, and the basic sequence being the first sequence, determining the sequence parameter of the SSS according to the information on the ID of the cell and the information on frame timing, the sequence parameter of the SSS comprising a root index for generating the first sequence, the first sequence being two first sequences.

6. The method according to claim 5, wherein root indexes $(r_0, r_1)$ of the two first sequences are determined according to the information on the ID of the cell and the information on frame timing by:

   in response to 2 frame timings of first frame timing and second frame timing, determining the root indexes of the two first sequences corresponding to the first frame timing such that $r_0 < r_1$ is met, and acquiring the root indexes of the two first sequences corresponding to the second frame timing by swapping the root indexes of the two first sequences corresponding to the first frame timing; or
   in response to 4 frame timings of first frame timing, second frame timing, third frame timing, and fourth frame timing, determining the root indexes of the two first sequences corresponding to the first frame timing such that $r_1 - r_0 > k_1$ is met; acquiring the root indexes of the two first sequences corresponding to the second frame timing by swapping the root indexes of the two first sequences corresponding to the first frame timing; determining the root indexes of the two first sequences corresponding to the third frame timing such that $r_1 - r_0 > k_2$ is met; acquiring the root indexes of the two first sequences corresponding to the fourth frame timing by swapping the root indexes of the two first sequences corresponding to the third frame timing, values of the $k_1, k_2$ belonging respectively to two sets with no overlap.

7. The method according to claim 6, wherein the root indexes $(r_0, r_1)$ of the two first sequences are determined according to the information on the ID of the cell and the information on frame timing by determining the root indexes of the two first sequences corresponding to the first frame timing, by:

   setting $q' = \lfloor N_{ID}/(N_{seq}-1) \rfloor$;

computing $q = \left\lfloor \dfrac{N_{ID} + q'(q'+1)/2}{N_{seq} - 1} \right\rfloor$ ;

computing $r' = N_{ID} + q(q+1)/2$;

computing $r_0 = \mathrm{mod}(r', N_{seq}) + 1$ ; and

computing $r_1 = \mathrm{mod}(r_0 + \lfloor r'/N_{seq} \rfloor, N_{seq}) + 1$,

wherein the $N_{ID}$ is an index of the ID of the cell, the $N_{ID}$={0,1,2,...,503}, the $N_{seq}$ is a number of the first sequences with different root indexes, the mod stands for complementation, and the $\lfloor \ \rfloor$ stands for rounding down.

8. The method according to claim 4, wherein the determining a sequence parameter of an SSS according to at least one of information on an identification, ID, of a cell, information on frame timing, information on a working mode, or information on a type of a system of Time Division Duplexing, TDD, or Frequency Division Duplexing, FDD comprises: in response to the SSS being generated according to the combination of the basic sequence and the scrambling sequence, and the basic sequence being the first sequence, determining the sequence parameter of the SSS according to the information on the ID of the cell, determining the scrambling sequence according to the information on frame timing, the sequence parameter of the SSS comprising a cyclic shift and a root index for generating the first sequence, the first sequence being one or two first sequences.

9. The method according to claim 7, wherein a cyclic shift and the root index of the first sequence are determined according to the information on the ID of the cell as

the root index $r = \mathrm{mod}(N_{ID}, N^L_{Seq}) + 1$ and

the cyclic shift $n_{CS} = \Delta^L_{CS} \times \left\lfloor \dfrac{N_{ID}}{N^L_{Seq}} \right\rfloor$,

wherein the $N_{ID}$ is the index of the ID of the cell, the $N_{ID}$={0,1,2,...,503}, the $N^L_{Seq}$ is the number of the first sequences with different root indexes,

the $\Delta^L_{CS}$ is an interval among cyclic shifts of the first sequence, the mod stands for complementation, and the $\lfloor \ \rfloor$ stands for rounding down.

10. The method according to claim 9, wherein a minimal interval among cyclic shifts of the first sequences corresponding to different IDs of cells having identical root indexes is maximized.

11. The method according to claim 4, wherein the determining a sequence parameter of an SSS according to at least one of information on an identification, ID, of a cell, information on frame timing, information on a working mode, or information on a type of a system of Time Division Duplexing, TDD, or Frequency Division Duplexing, FDD comprises: in response to the SSS being generated according to the combination of the basic sequence and the scrambling sequence, and the basic sequence being the second sequence, determining the sequence parameter of the SSS according to the information on the ID of the cell, determining the scrambling sequence according to the information on frame timing, the sequence parameter of the SSS comprising a cyclic shift and a root index corresponding to the second sequence of the SSS on each OFDM symbol.

12. The method according to claim 11, wherein the cyclic shift and the root index corresponding to the second sequence of the SSS on the each OFDM symbol are determined according to the information on the ID of the cell as

the root index $r_k = \mathrm{mod}(I_{Seq,k}, N^S_{Seq}) + 1$ and

the cyclic shift $n_{CS,k} = \Delta^S_{CS} \times \left\lfloor \dfrac{I_{Seq,k}}{N^S_{Seq}} \right\rfloor$,

wherein the $I_{seq,k}$ on the each OFDM symbol is determined as

$I_{seq,0} = \mathrm{mod}(N_{ID}, X)$ for the SSS on an OFDM symbol numbered 0, or as

$I_{Seq,k} = \mathrm{mod}(I_{seq,0} + k \times n_{seg}, X)$ for the SSS on an OFDM symbol numbered k,

wherein the $n_{seg} = \lceil N_{ID}/X \rceil$, the X is a number of second sequences, comprising second sequences with different root indexes and second sequences with identical root indexes and different cyclic shifts, the $N^S_{Seq}$ is a number of the second sequences with different root indexes,

the $\Delta^S_{CS}$ is an interval among cyclic shifts of the second sequences, and the $\lceil \ \rceil$ stands for rounding up.

13. The method according to claim 4, wherein the basic sequence comprises a Zadoff-Chu, ZC, sequence, a pseudorandom sequence, or a computer generated sequence, wherein the scrambling sequence comprises a pseudorandom sequence.

14. The method according to claim 13, wherein in response to the basic sequence being the ZC sequence, and the basic sequence being the first sequence, the length of the first sequence is determined according to the N, wherein for the N = 11, a length of the ZC sequence is one of {141,139,131,133}, wherein for the N = 9, the length of the ZC sequence is one of {107, 109}, wherein the length of the ZC sequence is one of {61,71,73}.

15. The method according to claim 14, wherein in response to a basic sequence of a Primary Synchronization Signal, PSS, being a ZC sequence, a ZC first sequence of the SSS having a length different from a length of the ZC sequence of the PSS is used, or a ZC first sequence of the SSS having a length identical to the length of the ZC sequence of the PSS, but having a root index different from a root index of the ZC sequence of the PSS, is used.

16. An apparatus for sending a Secondary Synchronization Signal, SSS, in a communication system, comprising a parameter module and a generating module,

    wherein the parameter module is arranged for: determining a sequence parameter of an SSS according to at least one of information on an identification, ID, of a cell, information on frame timing, information on a working mode, or information on a type of a system of Time Division Duplexing, TDD, or Frequency Division Duplexing, FDD,
    wherein the generating module is arranged for: generating the SSS according to the sequence parameter.

17. The apparatus according to claim 16, wherein the SSS occupies a Physical Resource Block, PRB, on a frequency domain, and multiple Orthogonal Frequency Division Multiplexing, OFDM, symbols in one or two sub-frames on a time domain.

18. The apparatus according to claim 16, wherein the generating module is further arranged for: generating the SSS according to a basic sequence or a combination of a basic sequence and a scrambling sequence.

19. The apparatus according to claim 18, wherein the generating module is arranged for: generating the basic sequence according to a first sequence or a second sequence, a length of the first sequence being $N_{RB}^{SC} \times N$, a length of the second sequence being $N_{RB}^{SC}$, the $N_{RB}^{SC}$ being a number of subcarriers occupied on a frequency domain by a Physical Resource Block, PRB, the N being a number of Orthogonal Frequency Division Multiplexing, OFDM, symbols occupied in a sub-frame by the SSS.

20. The apparatus according to claim 19, wherein the parameter module is further arranged for: in response to the SSS being generated according to the basic sequence, and the basic sequence being the first sequence, determining the sequence parameter of the SSS according to the information on the ID of the cell and the information on frame timing, the sequence parameter of the SSS comprising a root index for generating the first sequence, the first sequence being two first sequences.

21. The apparatus according to claim 20, wherein the parameter module is further arranged for: determining root indexes $(r_0, r_1)$ of the two first sequences according to the information on the ID of the cell and the information on frame timing by:

    in response to 2 frame timings of first frame timing and second frame timing, determining the root indexes of the two first sequences corresponding to the first frame timing such that $r_0 < r_1$ is met, and acquiring the root indexes of the two first sequences corresponding to the second frame timing by swapping the root indexes of the two first sequences corresponding to the first frame timing; or
    in response to 4 frame timings of first frame timing, second frame timing, third frame timing, and fourth frame timing, determining the root indexes of the two first sequences corresponding to the first frame timing such that $r_1 - r_0 > k_1$ is met; acquiring the root indexes of the two first sequences corresponding to the second frame timing by swapping the root indexes of the two first sequences corresponding to the first frame timing; determining the root indexes of the two first sequences corresponding to the third frame timing such that $r_1 - r_0 > k_2$ is met; acquiring the root indexes of the two first sequences corresponding to the fourth frame timing by swapping the root indexes of the two first sequences corresponding to the third frame timing, values of the $k_1, k_2$ belonging respectively to two sets with no overlap.

22. The apparatus according to claim 21, wherein the parameter module is further arranged for: determining the root indexes $(r_0, r_1)$ of the two first sequences according to the information on the ID of the cell and the information on frame timing by
    determining the root indexes of the two first sequences corresponding to the first frame timing, by:

    setting $q' = \lfloor N_{ID}/(N_{seq}-1) \rfloor$;

    computing $q = \left\lfloor \dfrac{N_{ID} + q'(q'+1)/2}{N_{seq} - 1} \right\rfloor$;

    computing $r' = N_{ID} + q(q+1)/2$;
    computing $r_0 = \mathrm{mod}(r', N_{seq}) + 1$; and
    computing $r_1 = \mathrm{mod}(r_0 + \lfloor r'/N_{seq} \rfloor, N_{seq}) + 1$,

wherein the $N_{ID}$ is an index of the ID of the cell, the $N_{ID}$={0,1,2,..., 503}, the $N_{seq}$ is a number of the first sequences with different root indexes, the mod stands for complementation, and the ⌊ ⌋ stands for rounding down.

23. The apparatus according to claim 19, wherein the parameter module is further arranged for: in response to the SSS being generated according to the combination of the basic sequence and the scrambling sequence, and the basic sequence being the first sequence, determining the sequence parameter of the SSS according to the information on the ID of the cell, determining the scrambling sequence according to the information on frame timing, the sequence parameter of the SSS comprising a cyclic shift and a root index for generating the first sequence, the first sequence being one or two first sequences.

24. The apparatus according to claim 19, wherein the parameter module is further arranged for: determining a cyclic shift and the root index of the first sequence according to the information on the ID of the cell as

the root index $r = \mathrm{mod}(N_{ID}, N_{Seq}^{L}) + 1$ and

the cyclic shift $n_{CS} = \Delta_{CS}^{L} \times \left\lfloor \dfrac{N_{ID}}{N_{Seq}^{L}} \right\rfloor$,

wherein the $N_{ID}$ is the index of the ID of the cell, the $N_{ID}$={0,1,2,...,503}, the $N_{Seq}^{L}$ is the number of the first sequences with different root indexes, the $\Delta_{CS}^{L}$ is an interval among cyclic shifts of the first sequence, the mod stands for complementation, and the ⌊ ⌋ stands for rounding down.

25. The apparatus according to claim 24, wherein the parameter module is further arranged for: maximizing a minimal interval among cyclic shifts of the first sequences corresponding to different IDs of cells having identical root indexes.

26. The apparatus according to claim 19, wherein the parameter module is arranged for: in response to the SSS being generated according to the combination of the basic sequence and the scrambling sequence, and the basic sequence being the second sequence, determining the sequence parameter of the SSS according to the information on the ID of the cell, determining the scrambling sequence according to the information on frame timing, the sequence parameter of the SSS comprising a cyclic shift and a root index corresponding to the second sequence of the SSS on each OFDM symbol.

27. The apparatus according to claim 26, wherein the parameter module is further arranged for: determining the cyclic shift and the root index corresponding to the second sequence of the SSS on the each OFDM symbol according to the information on the ID of the cell as

the root index $r_k = \mathrm{mod}(I_{Seq,k}, N_{Seq}^{S}) + 1$ and

the cyclic shift $n_{CS,k} = \Delta_{CS}^{S} \times \left\lfloor \dfrac{I_{Seq,k}}{N_{Seq}^{S}} \right\rfloor$,

wherein the $I_{seq,k}$ on the each OFDM symbol is determined as
$I_{seq,0}$=mod($N_{ID}$,X) for the SSS on an OFDM symbol numbered 0, or as
$I_{Seq,k}$=mod($I_{seq,0}$+$k \times n_{seg}$,X) for the SSS on an OFDM symbol numbered k,
wherein the $n_{seg}$=⌈$N_{ID}$/X⌉, the X is a number of second sequences, comprising second sequences with different root indexes and second sequences with identical root indexes and different cyclic shifts, the

$N_{Seq}^{S}$ is a number of the second sequences with different root indexes, the $\Delta_{CS}^{S}$ is an interval among cyclic shifts of the second sequences, and the ⌈ ⌉ stands for rounding up.

28. The apparatus according to claim 19, wherein the parameter module is further arranged for: in response to the basic sequence being a Zadoff-Chu, ZC, sequence, and the basic sequence being the first sequence, determining the length of the first sequence according to the N, wherein for the N = 11, a length of the ZC sequence is one of {141,139,131,133}, wherein for the N = 9, the length of the ZC sequence is one of {107, 109}, wherein for the N = 6, the length of the ZC sequence is one of {61,71,73}.

29. The apparatus according to claim 28, wherein in response to a basic sequence of a Primary Synchronization Signal, PSS, being a ZC sequence, a ZC first sequence of the SSS having a length different from a length of the ZC sequence of the PSS is used, or a ZC first sequence of the SSS having a length identical to the length of the ZC sequence of the PSS, but having a root index different from a root index of the ZC sequence of the PSS, is used.

30. An apparatus for sending a Secondary Synchronization Signal, SSS, in a communication system, comprising:

a processor; and

memory having stored thereon executable instructions for causing the processor to perform a method that comprises:

determining a sequence parameter of an SSS according to at least one of information on an identification, ID, of a cell, information on frame timing, information on a working mode, or information on a type of a system of Time Division Duplexing, TDD, or Frequency Division Duplexing, FDD; and generating the SSS according to the sequence parameter.

31. A storage medium having stored thereon executable instructions for performing the method according to any one of claims 1 to 15.

a sequence parameter of an SSS is determined

the SSS is generated according to the sequence parameter

**FIG. 1**

parameter module — generating module

**FIG. 2**

common sub-frame

N = 9 of OFDM symbols for sending SSS

downlink control region

**FIG. 3**

80 milliseconds

| radio frame 0 | radio frame 1 | radio frame 2 | radio frame 3 | radio frame 4 | radio frame 5 | radio frame 6 | radio frame 7 |

PSS

SSS

**FIG. 4**

FIG. 5

information on frame timing

scrambling sequence generating

information on ID of cell

information mapping

$(r, n_{CS})$

long sequence generating

subsequence generating

subcarrier mapping — subcarrier mapping — IFFT — CP adding

subcarrier mapping — subcarrier mapping — IFFT — CP adding

subcarrier mapping — subcarrier mapping — IFFT — CP adding

NB-SSS

**FIG. 6**

EP 3 404 969 A1

information on
frame timing → scrambling sequence generating → sub scrambling sequence generator

information on ID of cell → information mapping

$(r_0, n_{cs,0})$ → short sequence generator → ⊗ → DFT → subcarrier mapping → IFFT → CP adding

$(r_1, n_{cs,1})$ → short sequence generator → ⊗ → DFT → subcarrier mapping → IFFT → CP adding

$(r_{N-1}, n_{cs,N-1})$ → short sequence generator → ⊗ → DFT → subcarrier mapping → IFFT → CP adding

NB-SSS

**FIG. 7**

# INTERNATIONAL SEARCH REPORT

| International application No. |
| --- |
| **PCT/CN2016/107135** |

## A. CLASSIFICATION OF SUBJECT MATTER

H04W 56/00 (2009.01) i; H04J 11/00 (2006.01) i

According to International Patent Classification (IPC) or to both national classification and IPC

## B. FIELDS SEARCHED

Minimum documentation searched (classification system followed by classification symbols)

H04W; H04J

Documentation searched other than minimum documentation to the extent that such documents are included in the fields searched

Electronic data base consulted during the international search (name of data base and, where practicable, search terms used)

CNTXT; CNABS; CNKI: sequence, narrow-band LTE, secondary synchronization, machine type communication, cell ID, M2M, cell

identity, machine to machine, SSS, PCI, MTC, LTE

VEN; USTXT: sequence, narrow LTE, secondary, synchronization, machine type communication, cell ID, M2M, machine to machine,

SSS, PCI, MTC, LTE

## C. DOCUMENTS CONSIDERED TO BE RELEVANT

| Category* | Citation of document, with indication, where appropriate, of the relevant passages | Relevant to claim No. |
| --- | --- | --- |
| X | CN 102209377 A (ZTE CORP.), 05 October 2011 (05.10.2011), see description, paragraphs [0048]-[0153] | 1-3, 16-18, 30, 31 |
| X | CN 103458497 A (INTEL MOBILE COMMUNICATIONS GMBH), 18 December 2013 (18.12.2013), see description, paragraphs [0063]-[0075] | 1-3, 16-18, 30, 31 |
| X | CN 101573899 A (ERICSSON TELEFON AB L M), 04 November 2009 (04.11.2009), description, page 8, lines 17-27, and figure 2(d) | 1-3, 16-18, 30, 31 |
| X | CN 101578786 A (KOREA ELECTRONICS TELECOMM), 11 November 2009 (11.11.2009), description, paragraph 0113 | 1-3, 16-18, 30, 31 |
| A | WO 2015083997 A1 (LG ELECTRONICS INC.), 11 June 2015 (11.06.2015), the whole text of the description | 1-31 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 January 2017 (11.01.2017) | **17 February 2017 (17.02.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WU, Weimin**<br><br>Telephone No.: (86-10) **62411444** |

Form PCT/ISA/210 (second sheet) (July 2009)

# INTERNATIONAL SEARCH REPORT
## Information on patent family members

| International application No. |
| --- |
| **PCT/CN2016/107135** |

| Patent Documents referred in the Report | Publication Date | Patent Family | Publication Date |
| --- | --- | --- | --- |
| CN 102209377 A | 05 October 2011 | WO 2011120362 A1 | 06 October 2011 |
| | | US 2013016801 A1 | 17 January 2013 |
| | | US 8798218 B2 | 05 August 2014 |
| | | EP 2555563 A1 | 06 February 2013 |
| | | EP 2555563 A4 | 29 January 2014 |
| | | CN 102209377 B | 28 January 2015 |
| | | EP 2555563 B1 | 20 May 2015 |
| CN 103458497 A | 18 December 2013 | US 8964723 B2 | 24 February 2015 |
| | | DE 102013105360 A1 | 05 December 2013 |
| | | US 2013321042 A1 | 05 December 2013 |
| CN 101573899 A | 04 November 2009 | ZA 200904239 B | 25 August 2010 |
| | | CN 103068032 B | 13 May 2015 |
| | | MX 2009006988 A | 09 July 2009 |
| | | TW I434537 B | 11 April 2014 |
| | | AU 2007343268 A2 | 03 September 2009 |
| | | ZA 200904239 A | 25 August 2010 |
| | | WO 2008083886 A1 | 17 July 2008 |
| | | CN 103068032 A | 24 April 2013 |
| | | MA 31038 B1 | 01 December 2009 |
| | | CA 2674274 C | 24 November 2015 |
| | | IL 199208 A | 28 May 2014 |
| | | EP 2122858 A1 | 25 November 2009 |
| | | RU 2009130349 A | 20 February 2011 |
| | | PL 2122858 T3 | 31 January 2012 |
| | | ES 2372428 T3 | 19 January 2012 |
| | | BR PI0720770 A2 | 28 January 2014 |
| | | AT 522987 T | 15 September 2011 |
| | | PT 2122858 E | 05 December 2011 |
| | | NZ 578231 A | 30 March 2012 |
| | | AU 2007343268 B2 | 15 September 2011 |
| | | RU 2437215 C2 | 20 December 2011 |
| | | JP 2010516132 A | 13 May 2010 |
| | | EP 2122858 B1 | 31 August 2011 |
| | | DK 2122858 T3 | 02 January 2012 |
| | | CA 2674274 A1 | 17 July 2008 |
| | | MY 147045 A | 15 October 2012 |
| | | CN 101573899 B | 23 January 2013 |
| | | HK 1131276 A1 | 09 August 2013 |
| | | US 7961709 B2 | 14 June 2011 |
| | | KR 101384503 B1 | 10 April 2014 |
| | | KR 20090106598 A | 09 October 2009 |
| | | TW 200841625 A | 16 October 2008 |
| | | US 2009323629 A1 | 31 December 2009 |
| | | US 2015333859 A1 | 19 November 2015 |
| | | AU 2007343268 A1 | 17 July 2008 |
| | | JP 4897890 B2 | 14 March 2012 |
| CN 101578786 A | 11 November 2009 | EP 2127156 A2 | 02 December 2009 |
| | | EP 2375589 A1 | 12 October 2011 |
| | | US 8325705 B2 | 04 December 2012 |
| | | KR 100921777 B1 | 15 October 2009 |

Form PCT/ISA/210 (patent family annex) (July 2009)

## INTERNATIONAL SEARCH REPORT
### Information on patent family members

| | International application No. |
|---|---|
| | **PCT/CN2016/107135** |

| Patent Documents referred in the Report | Publication Date | Patent Family | Publication Date |
|---|---|---|---|
| | | CN 101578785 A | 11 November 2009 |
| | | US 2009252332 A1 | 08 October 2009 |
| | | AU 2008273132 A1 | 15 January 2009 |
| | | EP 2579478 B1 | 04 December 2013 |
| | | AT 524887 T | 15 September 2011 |
| | | US 2009252333 A1 | 08 October 2009 |
| | | EP 2127155 A4 | 27 October 2010 |
| | | CN 101578785 B | 12 June 2013 |
| | | AU 2008273133 A1 | 15 January 2009 |
| | | KR 100921778 B1 | 15 October 2009 |
| | | EP 2375588 A1 | 12 October 2011 |
| | | WO 2009008680 A2 | 15 January 2009 |
| | | EP 2375587 A1 | 12 October 2011 |
| | | EP 2127156 A4 | 04 August 2010 |
| | | AU 2008273134 A1 | 15 January 2009 |
| | | JP 2010533412 A | 21 October 2010 |
| | | CN 101578787 A | 11 November 2009 |
| | | BR PI0807745 A2 | 30 December 2014 |
| | | WO 2009008680 A3 | 19 March 2009 |
| | | AT 528867 T | 15 October 2011 |
| | | CN 101578787 B | 08 May 2013 |
| | | WO 2009008678 A2 | 15 January 2009 |
| | | JP 5171951 B2 | 27 March 2013 |
| | | US 8982911 B2 | 17 March 2015 |
| | | KR 20090006746 A | 15 January 2009 |
| | | US 2013064231 A1 | 14 March 2013 |
| | | WO 2009008678 A3 | 12 March 2009 |
| | | WO 2009008679 A2 | 15 January 2009 |
| | | JP 5171950 B2 | 27 March 2013 |
| | | JP 5319671 B2 | 16 October 2013 |
| | | EP 2122864 B1 | 14 September 2011 |
| | | WO 2009008679 A3 | 19 March 2009 |
| | | EP 2375589 B1 | 26 June 2013 |
| | | EP 2127155 B1 | 12 October 2011 |
| | | EP 2127156 B1 | 14 September 2011 |
| | | EP 2375588 B1 | 06 March 2013 |
| | | KR 20090006734 A | 15 January 2009 |
| | | EP 2375587 B1 | 03 April 2013 |
| | | EP 2579478 A1 | 10 April 2013 |
| | | ES 2402572 T3 | 06 May 2013 |
| | | KR 100921769 B1 | 15 October 2009 |
| | | JP 2010533411 A | 21 October 2010 |
| | | CN 101578786 B | 08 May 2013 |
| | | ES 2428348 T3 | 07 November 2013 |
| | | AT 524888 T | 15 September 2011 |
| WO 2015083997 A1 | 11 June 2015 | CN 105794297 A | 20 July 2016 |
| | | EP 3079431 A1 | 12 October 2016 |
| | | US 2016302080 A1 | 13 October 2016 |

**EP 3 404 969 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- technical report TR45.820V200. *3rd Generation Partnership Project, 3GPP*